# EUROPÄISCHE PATENTSCHRIFT

(11) **EP 1 752 809 B1**
(45) Veröffentlichungstag und Bekanntmachung des Hinweises auf die Patenterteilung: **14.12.2011**
(21) Anmeldenummer: 06118228.3
(22) Anmeldetag: 01.08.2006
(51) Int. Cl.: G02B 21/08, G02B 21/16, G02B 21/18

(54) **Mikroskop**
Microscope
Microscope

(30) Priorität: 08.08.2005 DE 102005037818
(43) Veröffentlichungstag der Anmeldung: 14.02.2007
(73) Patentinhaber: Leica Microsystems CMS GmbH, 35578 Wetzlar (DE)
(72) Erfinder: Hecker, Andreas, 35614, Aßlar (DE)
(74) Vertreter: Stamer, Harald

(56) Entgegenhaltungen:
- WO-A-2005/029149
- DE-A1- 10 309 269
- US-A- 4 585 315
- US-A- 4 881 802
- US-A1- 2002 097 489
- US-A1- 2003 058 530

## Beschreibung

Die vorliegende Erfindung betrifft ein Mikroskop zur herkömmlichen Fluoreszenzmikroskopie (Epi-Fluoreszenz) und zur Totalinternen-Reflexions-Mikroskopie, mit mindestens einer Lichtquelle für die herkömmliche Fluoreszenz-Beleuchtung und mindestens einer Lichtquelle für die evaneszente Beleuchtung, und mit einem Objektiv, wobei das von den Lichtquellen auf unterschiedlichen Beleuchtungspfaden kommende Beleuchtungslicht über einen Strahlvereiniger in das Objektiv und von dort zur Probe gelangt.

Bei der Totalinternen-Reflexions-Mikroskopie wird das Brechungsverhalten von Licht beim Übergang von einem optisch dichteren in ein optisch dünneres Medium genutzt. So ergibt sich beispielsweise für den Übergang von Deckglas (n1=1.,518) zu Wasser (n2=1,33) ein kritischer Winkel von 61 °, der Winkel der Total-Reflexion. Unter den Bedingungen der Total-Reflexion (Winkel ≥ 61°) bildet sich im Medium mit geringerem Brechungsindex eine stehende evaneszente Welle. Die Intensität dieser Welle fällt exponentiell mit dem Abstand zur Grenzfläche ab. Aufgrund dessen werden von der Grenzfläche weiter entfernte Fluorophore nicht angeregt. Die Hintergrundfluoreszenz wird erheblich reduziert. Der Bildkontrast wird dabei verbessert und die Auflösung wird gleichzeitig deutlich gesteigert. Voraussetzung für die Nutzung des voranstehend geschilderten Phänomens ist ein ausreichend großer Unterschied der Brechungsindizes von Deckglas und Medium.

Die DE 103 09 269 A1 offenbart ein Mikroskop mit einer Lichtquelle für die herkömmliche Epi-Fluoreszenz-Beleuchtung und einer Lichtquelle für die evaneszente Beleuchtung zur Totalinternen-Reflexions-Mikroskopie. Ihr Beleuchtungslicht gelangt auf unterschiedlichen Beleuchtungspfaden über einen Strahlvereiniger in ein Objektiv und von dort zur Probe, Die Austrittspupille des Objektivs ist auf den Strahlvereiniger abgebildet ist. Er ist derart strukturiert, dass er das Epi- Fluoreszenz- Beleuchtungslicht und das zur evaneszenten Beleuchtung dienende Beleuchtungslicht in geometrisch voneinander getrennten, vorzugsweise parallel oder koaxial zueinander verlaufenden Strahlengängen in das Objektiv leitet.

Aus der US 2002/0097489 A1 ist ein Mikroskop mit evaneszenter Beleuchtung einer Probe bekannt. Das Mikroskop beinhaltet eine Weißlichtquelle, deren Licht über eine Schlitzblende durch das Mikroskopobjektiv hindurch in den eine Probe tragenden Objektträger zur evaneszenten Beleuchtung eingekoppelt wird. Das Beleuchtungslicht pflanzt sich in dem Objektträger durch totalinterne Reflektion fort, wobei die Beleuchtung der Probe nur im Bereich des aus dem Objektträger herausragenden evaneszenten Feldes erfolgt. Mikroskope dieser Art sind unter dem Begriff TIRFM (Total Internal Reflection Fluorescent Microscope) bekannt. Die z-Auflösung von TIRF-Mikroskopen ist aufgrund des nur ca. 100 nm in die Probe ragenden evaneszenten Feldes außerordentlich gut.

Aus der DE 101 08 796 A1 ist ein hochaperturiges Objektiv, insbesondere für TIRF-Anwendungen, bekannt. Das Objektiv besteht aus einer ersten Linse mit einer positiven Brechkraft, einer zweiten Linse mit negativer Brechkraft, wobei das Brennweitenverhältnis zwischen den beiden Linsen im Bereich von - 0,4 und - 0,1 liegt und die Gesamtbrechkraft größer Null ist. Ferner beinhaltet das Objektiv zwei positive Linsen, deren Verhältnisdurchmesser zur Brennweite größer 0,3 und kleiner 0,6 ist. Ferner beinhaltet das Objektiv eine Negativlinse und einer Sammellinse, wobei die Negativlinse der Frontgruppe zugewandt ist und das Brennweitenverhältnis der Negativlinse und der Sammellinse zwischen - 0,5 und - 2 liegt.

Aus der DE 102 17 098 A1 ist eine Auflichtbeleuchtungsanordnung für die TIRF-Mikroskopie bekannt. Die Auflichtbeleuchtungsanordnung beinhaltet eine Beleuchtungsquelle, die im Betrieb ein polarisiertes Beleuchtungsstrahlenbündel abgibt, das unter einem Winkel zur optischen Achse propagiert und eine Umlenkeinrichtung, die das Beleuchtungsstrahlenbündel umlenkt und parallel zur optischen Achse in das Objektiv einkoppelt. Es ist bei dieser Auflichtbeleuchtungsanordnung vorgesehen, dass das von der Beleuchtungsquelle abgegebene Beleuchtungsstrahlenbündel s- und p-Polarisationsrichtungen mit einer Phasendifferenz aufweist und die Umlenkeinrichtung das Beleuchtungsstrahlenbündel x-mal reflektiert, wobei x = (n x 180 °- d)/60 °.

Aus der DE 101 43 481 A1 ist ein Mikroskop zur TIRM (Total Internal Reflection Microscopy) bekannt. Das Mikroskop weist ein Mikroskopgehäuse und ein Objektiv auf. Das von einer Beleuchtungseinrichtung ausgehende Beleuchtungslicht kann über einen in das Mikroskopgehäuse einschiebbaren Adapter eingekoppelt werden.

Aus der US 2004/0001253 A1 ist ein Mikroskop mit einem optischen Beleuchtungssystem, das ein einfaches Umschalten zwischen evaneszenter Beleuchtung und Reflektionsbeleuchtung ermöglicht. Das Beleuchtungssystem beinhaltet eine Laserlichtquelle, deren Licht in eine optische Faser eingekoppelt wird. Ferner ist eine Auskoppeloptik vorgesehen, die das aus der Faser austretende Licht in einen hinteren Brennpunkt des Mikroskopobjektivs fokussiert. Die optische Faser ist in einer Ebene senkrecht zur optischen Achse des Mikroskopobjektivs verschiebbar.

Aus der DE 102 29 935 A1 ist eine Einrichtung zur Einkopplung von Licht in einem Mikroskop bekannt. Dort wird in der Leuchtfeldblendenebene durch eine als Schieber ausgeführte Lichtleitfaser-Einkopplung Laserlicht auf das Präparat gerichtet. Die Erfindung ist insbesondere für das TIRF-Verfahren geeignet.

In der Rastermikroskopie wird eine Probe mit einem Lichtstrahl beleuchtet, um das von der Probe emittierte Detektionslicht, als Reflexions- oder Fluoreszenzlicht zu beobachten. Der Fokus eines Beleuchtungslichtstrahlenbündels wird mit Hilfe einer steuerbaren Strahlablenkeinrichtung, im Allgemeinen durch Verkippen zweier Spiegel, in einer Probenebene bewegt, wobei die Ablenkachsen meist senkrecht aufeinander stehen, so dass ein Spiegel in x-, der andere in y-Richtung ablenkt. Die Verkippung der Spiegel wird beispielsweise mit Hilfe von Galvanometer-Stellelementen bewerkstelligt. Die Leistung des vom Objekt kommenden Detektionslichtes wird in Abhängigkeit von der Position des Abtaststrahles gemessen. Üblicherweise werden die Stellelemente mit Sensoren zur Ermittlung der aktuellen Spiegelstellung ausgerüstet. Speziell in der konfokalen Rastermikroskopie wird ein Objekt mit dem Fokus eines Lichtstrahls in drei Dimensionen abgetastet.

Ein konfokales Rastermikroskop umfasst im Allgemeinen eine Lichtquelle, eine Fokussieroptik, mit der das Licht der Quelle auf eine Lochblende - die sog. Anregungsblende - fokussiert wird, einen Strahlteiler, eine Strahlablenkeinrichtung zur Strahlsteuerung, eine Mikroskopoptik, eine Detektionsblende und die Detektoren zum Nachweis des Detektions- bzw. Fluoreszenzlichtes. Das Beleuchtungslicht wird über einen Strahlteiler eingekoppelt. Das vom Objekt kommende Fluoreszenz- oder Reflexionslicht gelangt über die Strahlablenkeinrichtung zurück zum Strahlteiler, passiert diesen, um anschließend auf die Detektionsblende fokussiert zu werden, hinter der sich die Detektoren befinden. Diese Detektionsanordnung wird Descan-Anordnung genannt. Detektionslicht, das nicht direkt aus der Fokusregion stammt, nimmt einen anderen Lichtweg und passiert die Detektionsblende nicht, so dass man eine Punktinformation erhält, die durch sequentielles Abtasten des Objekts mit dem Fokus des Beleuchtungslichtstrahlenbündels zu einem dreidimensionalen Bild führt. Meist wird ein dreidimensionales Bild durch schichtweise Bilddatennahme erzielt.

Bei denen aus dem Stand der Technik bekannten Mikroskopen erfolgt die Einkopplung der evaneszenten Beleuchtung regelmäßig im Rahmen zweidimensionaler Lösungen, wenngleich die dort realisierte Verstelleinheit stets eindimensional ausgeführt ist. So erfolgt die Einkopplung beispielsweise über einen sogenannten neutralen Teiler, d.h. über einen Spiegel, der in einem gewissen Umfange reflektiert und ansonsten transmittiert. Des Weiteren ist die Einkopplung über einen dichroitischen Teiler bekannt. Dabei handelt es sich um einen besonderen Spiegel, der bis auf eine bestimmte Wellenlänge alle anderen Wellenlängen reflektiert. Ebenso ist es auch bereits bekannt, die Einkopplung über einen Polarisationsteiler zu bewerkstelligen. Dabei werden die Laser für die evaneszente Beleuchtung (TIRF-Beleuchtung) und der Laser für die herkömmliche Epi-Fluoreszenz-Beleuchtung orthogonal zueinander polarisiert und zusammengeführt. Als eindimensionale Möglichkeit zur Einkopplung der erforderlichen Strahlungsquelle ist es auch bereits bekannt, kleine zusätzliche Spiegel im Beleuchtungsstrahlengang für die Epi-Fluoreszenz-Beleuchtung zu verwenden.

Die bislang bekannten Verfahren und Vorrichtungen zur Einkopplung einer oder mehrerer Strahlungsquellen zur evaneszenten Beleuchtung sind in der Praxis problematisch, da es durch die Art der Einkopplung zu Einschränkungen der spezifischen Eigenschaften der jeweils verwendeten Strahlungsquelle kommt. So hat die Einkopplung über einen neutralen Teiler den Nachteil, dass Einbußen in der Leistung sowohl bei der Strahlungsquelle für die evaneszente Beleuchtung als auch bei der Strahlungsquelle für die Epi-Fluoreszenz-Beleuchtung auftreten. Die Einkopplung über einen dichroitischen Teiler ist nachteilig, da man sich dabei auf eine bestimmte Wellenlänge bzw. einen bestimmten Wellenlängenbereich festlegen muss. Will man im Rahmen einer solchen Realisierung die Wellenlänge wechseln, so muss man auch einen Wechsel des Strahlvereinigers bzw. Spiegels vornehmen. Die Einkopplung über einen Polarisationsteiler ruft ebenfalls einen gravierenden Nachteil hervor, da nämlich alle verwendeten Bausteile polarisationserhaltend ausgelegt sein müssen. Außerdem bedeutet die Verwendung eines Polarisationsteilers den Verzicht auf einen weiteren Freiheitsgrad bei den Strahlungsquellen. Schließlich scheidet die Einkopplung mittels kleiner zusätzlicher Spiegel im Beleuchtungsstrahlengang der Epi-Fluoreszenz-Beleuchtung von vorneherein aus, da es sich dabei um eine eindimensionale Lösung handelt. Die zusätzlichen Spiegel führen außerdem zu einer teilweisen Abdeckung der Epi-Fluoreszenz-Beleuchtung, so dass auch insoweit diese Möglichkeit zur Einkopplung nicht akzeptabel ist.

Der vorliegenden Erfindung liegt nun die Aufgabe zugrunde, ein Mikroskop zur herkömmlichen Fluoreszenzmikroskopie (Epi-Fluoreszenz) und zur Totalinternen-Reflexions-Mikroskopie derart auszugestalten und weiterzubilden, dass eine Einkopplung der evaneszenten Beleuchtung ohne dies aus dem Stand der Technik bekannten Nachteile möglich ist. Außerdem soll die Einkopplung auf konstruktiv einfache Weise erfolgen und den automatischen Mikroskopbetrieb auch bei wechselnden Objektiven ermöglichen.

Das erfindungsgemäße Mikroskop löst die voranstehende Aufgabe durch die Merkmale des Patentanspruchs 1. Danach ist das gattungsbildende Mikroskop dadurch gekennzeichnet, dass die Austrittspupille des Objektivs auf den Strahlvereiniger abgebildet ist und dass der Strahlvereiniger derart strukturiert ist, dass er das zur herkömmlichen Fluoreszenz-Beleuchtung dienenden Beleuchtungslicht und das zur evaneszenten Beleuchtung dienende Beleuchtungslicht in geometrisch voneinander getrennten, vorzugsweise parallel oder koaxial zueinander verlaufenden Strahlengängen in das Objektiv leitet.

Erfindungsgemäß ist erkannt worden, dass bei geschickter Anordnung und Ausgestaltung des Strahlvereinigers eine Einkopplung der evaneszenten Beleuchtungslichtquelle ohne Verluste und Einschränkungen möglich ist, nämlich dann, wenn die Austrittspupille des Objektivs auf den Strahlvereiniger abgebildet ist. Des Weiteren ist eine besondere Strukturierung des Strahlvereinigers erforderlich, wonach dieser nämlich das zur herkömmlichen Fluoreszenz-Beleuchtung dienende Beleuchtungslicht und das zur evaneszenten Beleuchtung dienende Beleuchtungslicht gemeinsam in das Objektiv leitet, jedoch in geometrisch voneinander getrennten Strahlengängen. Diese geometrisch voneinander getrennten Strahlungsgänge verlaufen entweder nebeneinander, vorzugsweise parallel, oder sind koaxial zueinander angeordnet. Wesentlich ist jedenfalls, dass der Strahlvereiniger aufgrund seiner Struktur es ermöglicht, das Beleuchtungslicht zur herkömmlichen Fluoreszenz-Beleuchtung und das Beleuchtungslicht zur evaneszenten Beleuchtung gemeinsam einzukoppeln, jedoch in geometrisch voneinander getrennten Strahlengängen, ohne auf Eigenschaften der Strahlung wie Wellenlänge oder Polarisation zurückzugreifen. Einbußen in der Leistung treten dabei nicht auf und es findet auch keine Beschränkung auf eine eindimensionale Lösung statt.

Im Konkreten handelt es sich bei dem Strahlvereiniger um einen strukturierten Spiegel, nämlich um einen strukturierten Sektionalspiegel. Die reflektierende Spiegelfläche kann dabei aufgedampft oder sonst wie erzeugt sein.

Im Konkreten ist es denkbar, dass der Strahlvereiniger auf der optischen Achse zwischen der Lichtquelle für die evaneszente Beleuchtung und dem Objektiv angeordnet ist. Entsprechend weist der Strahlvereiniger einen inneren Reflexionsbereich zum Einspiegeln des zur Fluoreszenz-Beleuchtung dienenden Beleuchtungslichts und einen äußeren Transmissionsbereich zum Durchlass des zur evaneszenten Beleuchtung dienenden Beleuchtungslichts auf. Dadurch ist es möglich, die Beleuchtung für die normale Fluoreszenz über den Spiegel einzuspiegeln und die Lichtquelle für die evaneszente Beleuchtung durch den Spiegel in der Objektivpupille zu positionieren.

Grundsätzlich ist es auch möglich, dass die beiden Achsen der Beleuchtungslichtquellen vertauscht sind. Entsprechend kann der Strahlvereiniger auf der optischen Achse zwischen der Lichtquelle für die herkömmliche Fluoreszenz-Beleuchtung und dem Objektiv angeordnet sein, wobei der Strahlvereiniger dann einen inneren Transmissionsbereich für das zur Fluoreszenz-Beleuchtung dienende Beleuchtungslicht und einen äußeren Reflexionsbereich für das zur evaneszenten Beleuchtung dienende Beleuchtungslicht aufweist. Beliebige Strukturen bzw. Geometrien der jeweiligen Bereiche des Strahlvereinigers sind denkbar, wobei es lediglich auf die geometrische Trennung der beiden Strahlengänge für die unterschiedlichen Arten der Beleuchtung ankommt.

Wie bereits zuvor erwähnt, kann der Strahlvereiniger zwei Bereiche zur Bewerkstelligung der geometrischen Trennung der beiden Strahlengänge aufweisen. Dabei kann der äußere Bereich des Strahlvereinigers unmittelbar an den inneren Bereich des Strahlvereinigers anschließen. Es ist denkbar, dass der innere Bereich des Strahlvereinigers als Kreisfläche und der äußere Bereich des Strahlvereinigers als Kreisringfläche ausgebildet sind. Auch ist es möglich, dass der innere Bereich des Strahlvereinigers als elliptische Fläche und der äußere Bereich des Strahlvereinigers als elliptische Ringfläche ausgebildet ist.

Im Rahmen einer weiteren Ausführungsform kann der innere Bereich des Strahlvereinigers als eckige Fläche, vorzugsweise als quadratische Fläche, und der äußere Bereich des Strahlvereinigers als entsprechend angepasste umlaufende eckige Fläche ausgebildet sein, wobei die äußere Fläche die innere Fläche insgesamt oder zumindest bereichsweise umgibt.

Typische Proben, die mittels der Totalinternen-Reflexions-Mikroskopie untersucht werden, liegen üblicherweise in wässrigen Lösungen vor, deren Brechungsindex oberhalb 1,33 liegt, d.h. oberhalb des Brechungsindex von Wasser. Legt man sich nun auf eine Apertur von beispielsweise 1,35 für die Grenze der beiden zuvor genannten Bereiche des Strahlvereinigers fest, bedeutet dies, dass es unmöglich ist, die maximal realisierbare Eindringtiefe zu erreichen. Aufgrund des nicht linearen Zusammenhangs zwischen der Eindringtiefe und dem Einfallswinkel ist dieser Unterschied nicht zu vernachlässigen.

Damit man stets die maximale Eindringtiefe erreichen kann, ist es a priori erforderlich, für jeden Brechungsindex einen eigens dafür ausgelegten

Strahlvereiniger mit angepasster Grenze zwischen den Bereichen zu verwenden, was dann zwangsläufig zu einem Umschaltmechanismus zwischen den Strahlvereinigern führt, um nämlich für jede Probe den passenden Strahlvereiniger benutzen zu können. Alternativ dazu ist es auch möglich, einen Strahlvereiniger mit insgesamt drei Bereichen zu verwenden, wonach nämlich zwischen den beiden zuvor genannten Bereichen, d.h. zwischen dem inneren Bereich des Strahlvereinigers und dem äußeren Bereich des Strahlvereinigers, eine Art Trennbereich oder Übergangsbereich vorgesehen ist. Dieser Übergangsbereich ist teilweise lichtdurchlässig und teilweise reflektierend. Im Konkreten kann der Übergangsbereich zum Beispiel im Sinne eines neutralen Teilers mit allen denkbaren Verhältnissen je nach Anwendung ausgeführt sein. Ebenso ist es möglich, dass der Übergangsbereich als Gradientenspiegel ausgeführt ist, dessen Reflektivität mit der numerischen Apertur steigt und bei dem in weiter außen liegenden Bereichen die evaneszente Beleuchtung bevorzugt transmittiert. Insoweit wird nach außen hin TIRF immer stärker bevorzugt.

An dieser Stelle sei angemerkt, dass der Strahlvereiniger einen zu dem zuvor erörterten Aufbau invertierten Aufbau haben kann oder in der Ausgestaltung der jeweiligen Bereiche Modifikationen in der Form und in der Struktur besitzt.

Des Weiteren ist es möglich, einen Strahlvereiniger zu verwenden, der einen Außenbereich umfasst, der wie der innere Bereich ausgebildet ist. Mit anderen Worten kann es sich dabei um einen Strahlvereiniger mit drei oder vier Bereichen bzw. Zonen handeln, sofern der zuvor erörterte Übergangsbereich ebenfalls realisiert ist. Die Vorkehrung des Übergangsbereichs ist auf jeden Fall fakultativ. Der außen ausgebildete Bereich hat entsprechend den voranstehenden Ausführungen die gleiche Beschaffenheit wie der Bereich im Zentrum bzw. in der Mitte des Strahlvereinigers. Dieser Bereich sollte auf das Objektiv mit der größten Vergrößerung angepasst sein, mit dessen Hilfe die evaneszente Beleuchtung bzw. die TIRF-Beleuchtung etabliert werden soll. Entsprechend ausgestaltete Strahlvereiniger ermöglichen das Einrichten der Probe unter Epi-Fluoreszenz mit schwach vergrößernden Objektiven und gleichzeitig eine optimale Nutzung des TIRF-Bereichs. Eine inverse Ausgestaltung der Bereiche ist auch hier möglich.

Grundsätzlich ist es von Vorteil, dass der Bereich oder wenn die Bereiche zum Durchlass der evaneszenten Beleuchtung auf unterschiedliche Objektive abgestimmt ist bzw. sind. Entsprechend den voranstehenden Ausführungen kann der Außenbereich auf das Objektiv mit der größten Vergrößerung bei evaneszenter Beleuchtung angepasst sein. Beliebige sonstige Anpassungen sind denkbar.

Von ganz besonderem Vorteil ist es, wenn der Strahlvereiniger mit einer im Objektiv angeordneten Blende vorzugsweise in der Nähe oder in der Ebene der Objektivpupille zusammenwirkt, die einen für das evaneszente Beleuchtungslicht undurchlässigen sowie für das zurückkehrende Detektionslicht durchlässigen mittigen Bereich und einen für das evaneszenten Beleuchtungslicht durchlässigen Randbereich aufweist. Eine Abstimmung zwischen dem Strahlvereiniger und der dem Objektiv zuzuordnenden Blende ist insoweit von besonderem Vorteil.

Von besonderer Bedeutung ist die Erkenntnis, dass die Lage und Größe der Bereiche des Strahlvereinigers und somit der Strahlvereiniger insgesamt in Abhängigkeit von der Vergrößerung des Objektivs auszuwählen ist. Ebenso ist von Bedeutung, dass die Lage und Größe der Bereiche des Strahlvereinigers und somit der Strahlvereiniger insgesamt auch in Abhängigkeit von dem Brechungsindex der die zu untersuchende Probe beinhaltenden Lösung bzw. der Probe selbst auswählbar ist. Im Lichte dieser Erkenntnis ist es möglich, dass für jedes zur Verfügung stehende Objektiv ein in den Bereichen angepasster Strahlvereiniger zur Verfügung steht. Das bedeutet, dass zur optimalen Ausnutzung der Bereiche des Strahlvereinigers für jedes Objektiv ein eigener Strahlvereiniger benutzt wird und dass jedes Mal, wenn das Objektiv gewechselt wird, auch der Strahlvereiniger zu wechseln ist. Dabei ist es wiederum vorgesehen, dass die unterschiedlichen Strahlvereiniger über einen Wechselmechanismus, vorzugsweise über eine Revolvereinrichtung, in den Strahlgang verbringbar und dort positionierbar sind. Alternativ dazu steht für die Vorkehrung eines festen, nicht schaltbaren Strahlvereinigers die weiterreichende Vorkehrung einer Zwischenabbildung mit variabler Vergrößerung zwischen dem Strahlvereiniger und dem Objektiv, so dass die Größe der Pupille auf die Größe des Strahlvereinigers anpassbar ist.

In Bezug auf die zuvor erörterte mechanische Lösung, wonach nämlich entsprechend den Objektiven unterschiedliche Strahlvereiniger einzutauschen sind, bietet sich der automatische Betrieb des Mikroskops an, wonach nämlich zur automatischen Einstellung der Wechselmechanismus für die Strahlvereiniger mit einem Wechselmechanismus für die Objektive synchronisiert ist. So bietet es sich an, dass die beiden Wechselmechanismen als Revolvereinrichtungen ausgeführt sind, die synchron zueinander betrieben bzw. aktiviert werden.

In Bezug auf die jeweiligen Lichtquellen sein angemerkt, dass für die herkömmliche Fluoreszenz-Beleuchtung und/oder für die evaneszente Beleuchtung jeweils auch zwei oder mehrere Lichtquellen gleichzeitig zum Einsatz kommen können, wobei eine entsprechende Einkopplung des jeweiligen Beleuchtungslichts möglich ist. Auch ist es denkbar, dass neben der evaneszenten Beleuchtung ein simultan arbeitender Laser einsetzbar ist, der die Funktion eines Manipulationslasers hat. Dieser Manipulationslaser kann zur herkömmlichen Epi-Fluoreszenz-Anregung genutzt werden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigt
- Fig. 1: in einer schematischen Ansicht den grundsätzlichen Verlauf des Beleuchtungsstrahlengangs in einem erfindungsgemäßen Mikroskop,
- Fig. 2: in einer schematischen Ansicht ein erstes Ausführungsbeispiel eines in der Anordnung gemäß Fig. 1 verwendeten Strahlvereinigers,
- Fig. 3: in einer schematischen Ansicht ein zweites Ausführungsbeispiel eines in der Anordnung gemäß Fig. 1 verwendeten Strahlvereinigers und
- Fig. 4: in einer schematischen Ansicht ein drittes Ausführungsbeispiel eines in der Anordnung gemäß Fig. 1 verwendeten Strahlvereinigers.

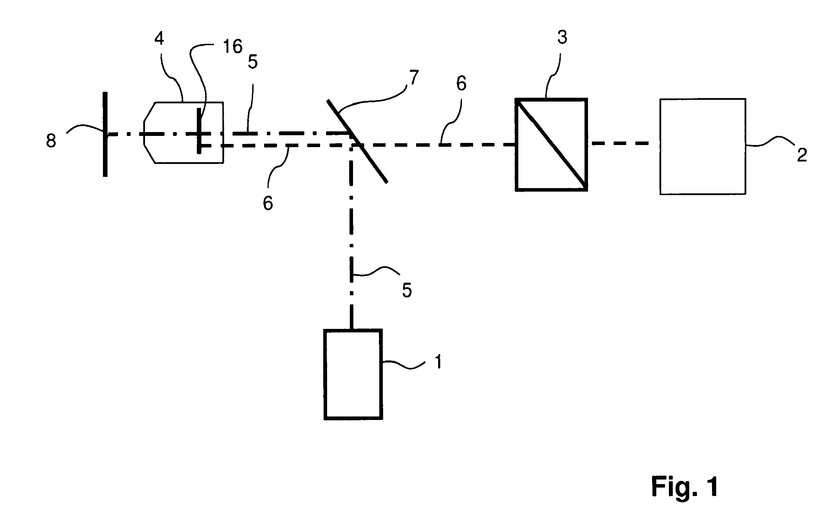

Fig. 1 zeigt den grundsätzlichen Aufbau eines erfindungsgemäßen Mikroskops, welches sich sowohl zur herkömmlichen Fluoreszenzmikroskopie (Epi-Fluoreszenz) und zur Totalinternen-Reflexions-Mikroskopie eignet. Genauer gesagt zeigt Fig. 1 den Beleuchtungsstrahlengang in Bezug auf die beiden Betriebsarten. Das Mikroskop umfasst eine Lichtquelle 1 für die herkömmliche Fluoreszenz-Beleuchtung und eine Lichtquelle 2 für die evaneszente Beleuchtung, wobei ein Scanner 3 vorgesehen sein kann.

Des Weiteren umfasst das Mikroskop ein Objektiv 4, wobei das von den Lichtquellen 1, 2 auf unterschiedlichen Beleuchtungspfaden, 5, 6 kommende Beleuchtungslicht über einen Strahlvereiniger 7 in das Objektiv und von dort zur Probe 8 gelangt.

Erfindungsgemäß ist die Austrittspupille des Objektivs 4 auf den Strahlvereiniger 7 abgebildet.

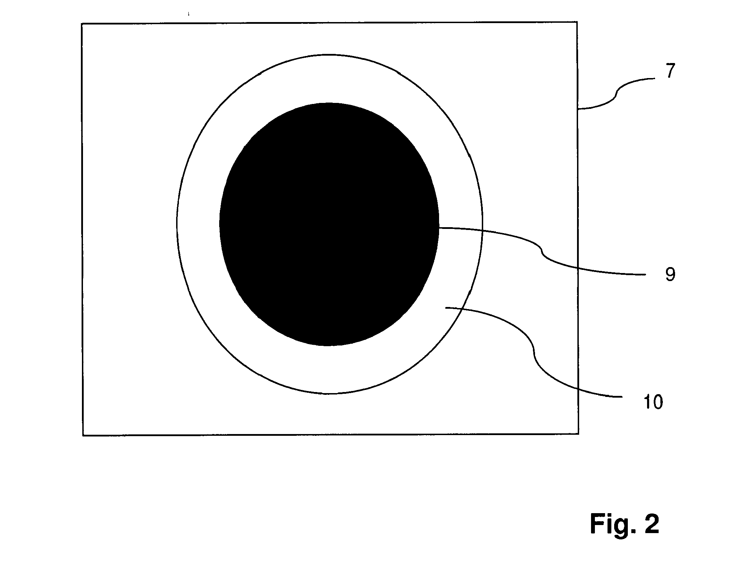

Die Fig. 2, 3 und 4 zeigen in schematischen Ansichten gemeinsam mit der Fig. 1, dass der Strahlvereiniger 7 derart strukturiert ist, dass er das zur herkömmlichen Fluoreszenz-Beleuchtung dienende Beleuchtungslicht und das zur evaneszenten Beleuchtung dienende Beleuchtungslicht und das zur evaneszenten Beleuchtung dienende Beleuchtungslicht in geometrisch voneinander getrennten Strahlengängen 5, 6 in das Objektiv 4 leitet.

Genauer gesagt ist der Strahlvereiniger 7 als strukturierter Sektionalspiegel ausgeführt.

Bei dem in Fig. 2 gezeigten Ausführungsbeispiel repräsentiert der schwarz dargestellte mittige Bereich 9 den verspiegelten Teil des Strahlvereinigers 7, durch den die Epi-Fluoreszenz-Beleuchtung auf die optische Achse gelegt wird. Der weiß dargestellte äußere Bereich 10 ist für das Licht durchlässig und dient zur Durchspiegelung der TIRF-Beleuchtung, und zwar im Rahmen einer Anordnung gemäß der Fig. 1.

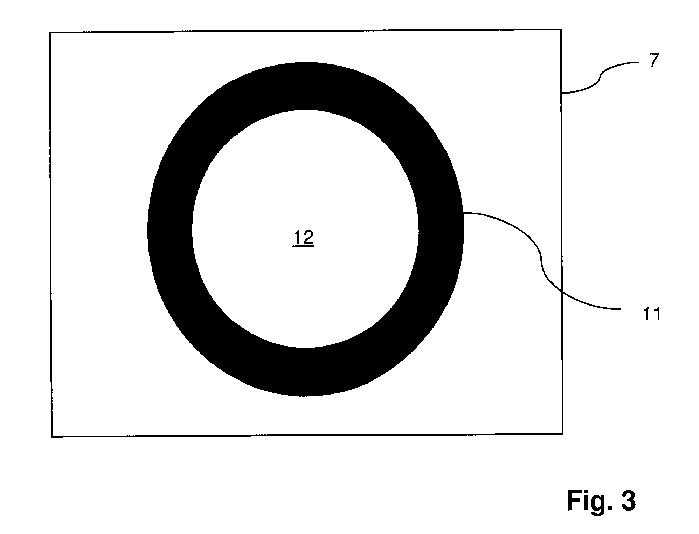

Entsprechend dem in Fig. 3 gezeigten Ausführungsbeispiel eines Strahlvereinigers 7 ist der schwarz dargestellte äußere Bereich 11 verspiegelt, wodurch die TIRF-Beleuchtung in den Strahlengang eingekoppelt wird. Der weiß dargestellte mittige Bereich 12 ist lichtdurchlässig und dient zur Durchspiegelung der Epi-Fluoreszenz-Beleuchtung. Gegenüber der Darstellung in Fig. 1 sind die Achsen entsprechend vertauscht.

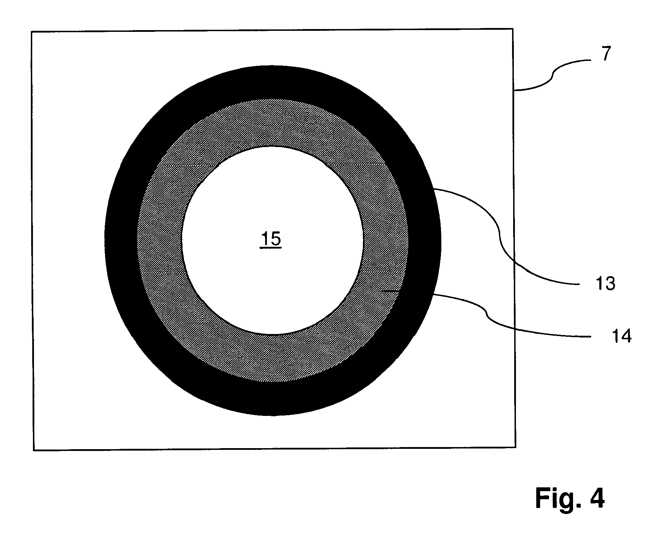

Fig. 4 zeigt ein drittes Ausführungsbeispiel eines Strahlvereinigers 7, bei dem insgesamt drei unterschiedliche Bereiche vorgesehen sind.

Der schwarz dargestellte äußere Bereich 13 ist verspiegelt und dient zur Einspiegelung der TIRF-Beleuchtung. Der sich daran anschließende weitere Bereich, der in der allgemeinen Beschreibung als Übergangsbereich 14 bezeichnet ist, ist teilweise reflektierend und teilweise lichtdurchlässig ausgestaltet. Der weiß dargestellte mittige Bereich 15 ist wiederum lichtdurchlässig, so dass durch diesen Bereich die Epi-Fluoreszenz-Beleuchtung einkoppelbar ist.

In Bezug auf Merkmale, die sich den Figuren nicht entnehmen lassen, sei zur Vermeidung von Wiederholungen auf den allgemeinen Teil der Beschreibung verwiesen.

Schließlich sei darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Mikroskop zur herkömmlichen Fluoreszenzmikroskopieinsbesondere zur Epi-Fluoreszenzmikroskopie,
und zur Totalinternen-Reflexions-Mikroskopie mit evaneszenter Beleuchtung, umfassend mindestens eine erste Lichtquelle (1) für die herkömmliche Fluoreszenz-Beleuchtung und mindestens eine zweige Lichtquelle (2) für die evaneszente Beleuchtung,
einen Wechselmechanismus mit mehreren Objektiven (4), wovon jeweils ein Objektiv (4) im Strahlengang verwendet wird
mehrere Strahlvereiniger, wovon jeweils ein Strahlvereiniger (7) über einen Wechselmechanismus in den Strahlengang verbringbar und dort positionierbar ist,
wobei das von den mindestens zwei Lichtquellen (1, 2) auf unterschiedlichen Beleuchtungspfaden (5, 6) kommende Beleuchtungslicht über den im Strahlengang befindlichen Strahlvereiniger (7) in das im Strahlengang befindliche Objektiv (4) und von dort zur Probe (8) gelangt,
wobei die Austrittspupille des Objektivs (4) auf den Strahlvereiniger (7) abgebildet ist und dieser Strahlvereiniger (7) in mehrere Bereiche derart strukturiert ist, dass er das zur herkömmlichen Fluoreszenz-Beleuchtung dienende Beleuchtungslicht und das zur evaneszenten Beleuchtung dienende Beleuchtungslicht in geometrisch voneinander getrennten, vorzugsweise parallel oder koaxial zueinander verlaufenden Strahlengängen (5, 6) in das im Strahlengang befindliche Objektiv (4) leitet,
wobei für jedes zur Verfügung stehende Objektiv (4) ein derart strukturierter Strahlvereiniger (7) zur Verfügung steht,
so dass die Lage und Größe der Bereiche (9, 110; 11, 12) des Strahlvereinigers (7) und somit der mehrerer Strahlvereiniger insgesamt in Abhängigkeit von der Vergrößerung des Objektivs (4) auswählbar sind,

2. Mikroskop nach Anspruch 1, **dadurch gekennzeichnet, dass** der Strahlvereiniger (7) als strukturierter Sektionalspiegel ausgeführt ist.

3. Mikroskop nach Anspruch 2, **dadurch gekennzeichnet, dass** die reflektierende Spiegelfläche aufgedampft ist.

4. Mikroskop nach einem der Ansprüche 1 bis 3, **dadurch gekennzeichnet, dass** der Strahlvereiniger (7) auf der optischen Achse zwischen der Lichtquelle (2) für die evaneszente Beleuchtung und dem Objektiv (4) angeordnet ist und einen inneren Reflexionsbereich (9) zum Einspiegeln des zur Fluoreszenzbeleuchtung dienenden Beleuchtungslichts und einen äußeren Transmissionsbereich (10) zum Durchlass des zur evaneszenten Beleuchtung dienenden Beleuchtungslichts aufweist.

5. Mikroskop nach einem der Ansprüche 1 bis 3, **dadurch gekennzeichnet, dass** der Strahlvereiniger (7) auf der optischen Achse zwischen der Lichtquelle (1) für die herkömmliche Fluoreszenz-Beleuchtung und dem Objektiv (4) angeordnet ist und einen inneren Transmissionsbereich (12) für das zur Fluoreszenzbeleuchtung dienende Beleuchtungslicht und einen äußeren Reflexionsbereich (11) für das zur evaneszenten Beleuchtung dienende Beleuchtungslicht aufweist.

6. Mikroskop nach Anspruch 4 oder 5, **dadurch gekennzeichnet, dass** der äußere Bereich (10 oder 11) des Strahlvereinigers (7) unmittelbar an den inneren Bereich (9 oder 12) des Strahlvereinigers (7) anschließt.

7. Mikroskop nach einem der Ansprüche 4 bis 6, **dadurch gekennzeichnet, dass** der innere Bereich (9 oder 12) des Strahlvereinigers (7) als Kreisfläche und der äußere Bereich (10 oder 11) des Strahlvereinigers (7) als Kreisringfläche ausgebildet sind.

8. Mikroskop nach einem der Ansprüche 4 bis 6, **dadurch gekennzeichnet, dass** der innere Bereich des Strahlvereinigers (7) als elliptische Fläche und der äußere Bereich des Strahlvereinigers (7) als elliptische Ringfläche ausgebildet sind.

9. Mikroskop nach einem der Ansprüche 4 bis 6, **dadurch gekennzeichnet, dass** der innere Bereich des Strahlvereinigers (7) als eckige Fläche, vorzugsweise als quadratische Fläche, und der äußere Bereich des Strahlvereinigers (7) als entsprechend angepasste umlaufende eckige Fläche ausgebildet sind.

10. Mikroskop nach einem der Ansprüche 4 bis 9, **dadurch gekennzeichnet, dass** zwischen dem inneren Bereich (15) des Strahlvereinigers (7) und dem äußeren Bereich (13) des Strahlvereinigers (7) ein Trennbereich oder Übergangsbereich (14) ausgebildet ist.

11. Mikroskop nach Anspruch 10, **dadurch gekennzeichnet, dass** der Übergangsbereich (14) teilweise lichtdurchlässig und teilweise reflektierend ist.

12. Mikroskop nach Anspruch 10 oder 11, **dadurch gekennzeichnet, dass** der Übergangsbereich (14) im Sinne eines neutralen Teilers ausgeführt ist.

13. Mikroskop nach Anspruch 10 oder 11, **dadurch gekennzeichnet, dass** der Übergangsbereich (14) als Gradientenspiegel ausgeführt ist, dessen Reflektivität mit der numerischen Apertur steigt und bei dem in weiter außen liegenden Bereichen die evaneszente Beleuchtung bevorzugt transmittiert.

14. Mikroskop nach einem der Ansprüche 4 bis 13, **dadurch gekennzeichnet, dass** der Strahlvereiniger (7) einen Außenbereich umfasst, der wie der innere Bereich ausgebildet ist.

15. Mikroskop nach Anspruch 14, **dadurch gekennzeichnet, dass** die beiden Bereiche zum Durchlass der evaneszenten Beleuchtung auf unterschiedliche Objektive (4) abgestimmt sind.

16. Mikroskop nach Anspruch 14 oder 15, **dadurch gekennzeichnet, dass** der Außenbereich auf das Objektiv (4) mit der größten Vergrößerung bei evaneszenter Beleuchtung angepasst ist.

17. Mikroskop nach einem der Ansprüche 1 bis 16, **dadurch gekennzeichnet, dass** der Strahlvereiniger (7) mit einer im Objektiv (4) angeordneten Blende (16) vorzugsweise in der Nähe oder in der Ebene der Objektivpupille zusammenwirkt, die einen für das evaneszente Beleuchtungslicht undurchlässigen sowie für das zurückkehrende Detektionslicht durchlässigen mittigen Bereich und einen für das evaneszente Beleuchtungslicht durchlässigen Randbereich aufweist.

18. Mikroskop nach einem der Ansprüche 1 bis 17, **dadurch gekennzeichnet, dass** die Lage und Größe der Bereiche des Strahlvereinigers (7) und somit der Strahlvereiniger (7) insgesamt in Abhängigkeit von dem Brechungsindex der die zu untersuchende Probe (8) beinhaltenden Lösung bzw. der Probe (8) selbst auswählbar ist.

19. Mikroskop nach Anspruch 1, **dadurch gekennzeichnet, dass** zur automatischen Einstellung der Wechselmechanismus für die Strahlvereiniger (7) mit dem Wechselmechanismus für die Objektive (4) synchronisiert ist.

20. Mikroskop nach einem der Ansprüche 1 bis 19, **dadurch gekennzeichnet, dass** bei fest vorgegebenem Strahlvereiniger (7) zwischen dem Strahlvereiniger (7) und dem Objektiv (4) eine Zwischenabbildung mit variabler Vergrößerung vorgesehen ist, so dass eine Anpassung der Größe der Pupille auf den Strahlvereiniger (7) erfolgen kann.

21. Mikroskop nach einem der Ansprüche 1 bis 20, **dadurch gekennzeichnet, dass** für die herkömmliche Fluoreszenz-Beleuchtung und/oder für die evaneszente Beleuchtung jeweils zwei oder mehrere Lichtquellen (1, 2) vorgesehen sind.

22. Mikroskop nach Anspruch 1, **dadurch gekennzeichnet, dass** neben der evaneszenten Beleuchtung ein simultan arbeitender Manipulationslaser einsetzbar ist.

## Claims

1. Microscope for conventional fluorescence microscopy, in particular for Epi fluorescence microscopy,
and for total internal reflection microscopy with evanescent illumination,
comprising at least a first light source (1) for conventional fluorescence illumination and at least a second light source (2) for evanescent illumination,
an exchange mechanism with a plurality of objectives (4), of which in each case one objective (4) is used in the beam path, and
a plurality of beam combiners, of which in each case one beam combiner (7) can be brought into the beam path via an exchange mechanism and can be positioned there, the illumination light, which comes from the at least two light sources (1, 2) on different illumination paths (5, 6), passing via the beam combiner (7) located in the beam path into the objective (4) located in the beam path and, from there, to the sample (8),
the exit pupil of the objective (4) being imaged onto the beam combiner (7), and said beam combiner (7) being structured into a plurality of regions in such a way that it guides the illumination light serving for conventional fluorescence illumination and the illumination light serving for evanescent illumination into the objective (4) located in the beam path in beam paths (5, 6) geometrically separated from one another and preferably running parallel to or coaxially with one another,
a beam combiner (7) structured in such a way being available for each available objective (4),
so that the position and size of the regions (9, 10; 11, 12) of the beam combiner (7), and thus of the plurality of beam combiners, can be selected overall as a function of the magnification of the objective (4).

2. Microscope according to Claim 1, **characterized in that** the beam combiner (7) is designed as a structured sectional mirror.

3. Microscope according to Claim 2, **characterized in that** the reflecting mirror surface is vapour-deposited.

4. Microscope according to one of Claims 1 to 3, **characterized in that** the beam combiner (7) is arranged on the optical axis between the light source (2) for the evanescent illumination and the objective (4), and has an inner reflection region (9) for reflecting in the illumination light serving for fluorescence illumination, and an outer transmission region (10) for transmitting the illumination light serving for evanescent illumination.

5. Microscope according to one of Claims 1 to 3, **characterized in that** the beam combiner (7) is arranged on the optical axis between the light source (1) for conventional fluorescence illumination and the objective (4), and has an inner transmission region (12) for the illumination light serving for fluorescence illumination, and an outer reflection region (11) for the illumination light serving for evanescent illumination.

6. Microscope according to Claim 4 or 5, **characterized in that** the outer region (10 or 11) of the beam combiner (7) directly adjoins the inner region (9 or 12) of the beam combiner (7).

7. Microscope according to one of Claims 4 to 6, **characterized in that** the inner region (9 or 12) of the beam combiner (7) is designed as a circular surface, and the outer region (10 or 11) of the beam combiner (7) is designed as an annular surface.

8. Microscope according to one of claims 4 to 6, **characterized in that** the inner region of the beam combiner (7) is designed as an elliptical surface, and the outer region of the beam combiner (7) is designed as an elliptical annular surface.

9. Microscope according to one of Claims 4 to 6, **characterized in that** the inner region of the beam combiner (7) is designed as an angular surface, preferably as a square surface, and the outer region of the beam combiner (7) is designed as a suitably matched peripheral angular surface.

10. Microscope according to one of Claims 4 to 9, **characterized in that** a separating region or transition region (14) is formed between the inner region (15) of the beam combiner (7) and the outer region (13) of the beam combiner (7).

11. Microscope according to Claim 10, **characterized in that** the transition region (14) is partially transparent and partially reflecting.

12. Microscope according to Claim 10 or 11, **characterized in that** the transition region (14) is embodied as a neutral splitter.

13. Microscope according to Claim 10 or 11, **characterized in that** the transition region (14) is embodied as a graded-index mirror whose reflectivity increases with the numerical aperture, and in which the evanescent illumination is preferably transmitted in regions lying further out.

14. Microscope according to one of Claims 4 to 13, **characterized in that** the beam combiner (7) comprises an outer region which is designed like the inner region.

15. Microscope according to Claim 14, **characterized in that** the two regions for transmitting the evanescent illumination are tuned to different objectives (4).

16. Microscope according to Claim 14 or 15, **characterized in that** the outer region is matched to the objective (4) with the greatest magnification in the case of evanescent illumination.

17. Microscope according to one of Claims 1 to 16, **characterized in that** the beam combiner (7) cooperates with a diaphragm (16) arranged in the objective (4), preferably in the vicinity or in the plane of the objective pupil, which has a central region which is opaque to the evanescent illumination light, and transparent to the returning detection light, and an edge region which is transparent to the evanescent illumination light.

18. Microscope according to one of Claims 1 to 17, **characterized in that** the position and size of the regions of the beam combiner (7), and thus the beam combiner (7) as a whole, can be selected as a function of the refractive index of the solution containing the sample (8) under study, or of the sample (8) itself.

19. Microscope according to Claim 1, **characterized in that** the exchange mechanism for the beam combiner (7) is synchronized with the exchange mechanism for the objectives (4) for the purpose of automatic adjustment.

20. Microscope according to one of Claims 1 to 19, **characterized in that** given a permanently prescribed beam combiner (7) an intermediate image of variable magnification is provided between the beam combiner (7) and the objective (4) so that the size of the pupil can be adapted to the beam combiner (7).

21. Microscope according to one of Claims 1 to 20, **characterized in that** in each case two or more light sources (1, 2) are provided for conventional fluorescence illumination and/or for evanescent illumination.

22. Microscope according to Claim 1, **characterized in that** a simultaneously operating manipulating laser can be used in addition to the evanescent illumination.

## Revendications

1. Microscope pour la microscopie en fluorescence traditionnelle, notamment pour la microscopie en épifluorescence,
et pour la microscopie à réflexions internes totale avec illumination évanescente comprenant au moins une première source lumineuse (1) pour l'illumination en fluorescence traditionnelle et au moins une deuxième source lumineuse (2) pour l'illumination évanescente,
un mécanisme de changement avec plusieurs objectifs (4) dont respectivement un objectif (4) est utilisé dans le chemin de faisceau,
plusieurs unificateurs de faisceaux dont respectivement un unificateur de faisceaux (7) peut être acheminé dans le chemin de faisceau et y être positionné,
dans lequel la lumière d'illumination provenant au moins des deux sources lumineuses (1, 2) par des chemins de faisceaux différents (5, 6) à travers l'unificateur de faisceaux (7) se trouvant dans le chemin de faisceau, arrive dans l'objectif (4) se trouvant dans le chemin de faisceau et de là sur l'échantillon (8),
dans lequel la pupille de sortie de l'objectif (4) est reproduite sur l'unificateur de faisceaux (7) et cet unificateur de faisceaux (7) étant structuré dans différents domaines de manière à guider la lumière d'illumination servant à l'illumination en fluorescence traditionnelle et la lumière d'illumination servant à l'illumination évanescente, par des chemins de faisceaux (5, 6) suivant des trajets géométriquement séparés l'un de l'autre, de préférence parallèles ou coaxiaux l'un par rapport à l'autre, vers l'intérieur de l'objectif (4) se trouvant dans le chemin de faisceaux,
dans lequel on dispose d'un unificateur de faisceaux (7) ainsi structuré pour chacun des objectifs disponibles (4),
de manière à pouvoir choisir la position et la dimension des domaines (9, 10 ; 11, 12) de l'unificateur de faisceaux (7) et ainsi de l'ensemble de la multitude d'unificateurs de faisceaux en fonction du grossissement de l'objectif (4).

2. Microscope selon la revendication 1, **caractérisé en ce que** l'unificateur de faisceaux (7) est réalisé sous la forme d'un miroir profilé structuré.

3. Microscope selon la revendication 2, **caractérisé en ce que** la surface réfléchissante du miroir est déposée par vaporisation.

4. Microscope selon une des revendications 1 à 3, **caractérisé en ce que** l'unificateur de faisceaux (7) est disposé sur l'axe optique entre la source lumineuse (2) pour l'illumination évanescente et l'objectif (4) et comporte un domaine de réflexion interne (9) pour l'incrustation de la lumière d'illumination servant à l'illumination en fluorescence et un domaine de transmission externe (10) pour le passage de la lumière d'illumination servant à l'illumination évanescente.

5. Microscope selon une des revendications 1 à 3, **caractérisé en ce que** l'unificateur de faisceaux (7) est disposé sur l'axe optique entre la source lumineuse (1) pour l'illumination en fluorescence traditionnelle et l'objectif (4) et comporte un domaine de transmission interne (12) pour la lumière d'illumination servant à l'illumination en fluorescence et un domaine de réflexion externe (11) pour la lumière d'illumination servant à l'illumination évanescente.

6. Microscope selon la revendication 4 ou 5, **caractérisé en ce que** le domaine externe (10 ou 11) de l'unificateur de faisceaux (7) est accolé au domaine interne (9 ou 12) de l'unificateur de faisceaux (7).

7. Microscope selon une des revendications 4 à 6, **caractérisé en ce que** le domaine interne (9 ou 12) de l'unificateur de faisceaux (7) est réalisé sous la forme d'une surface circulaire et le domaine externe (10 ou 11) de l'unificateur de faisceaux (7) sous la forme d'une surface annulaire circulaire.

8. Microscope selon une des revendications 4 à 6, **caractérisé en ce que** le domaine interne de l'unificateur de faisceaux (7) est réalisé sous la forme d'une surface elliptique et le domaine externe de l'unificateur de faisceaux (7) sous la forme d'une surface annulaire elliptique.

9. Microscope selon une des revendications 4 à 6, **caractérisé en ce que** le domaine interne de l'unificateur de faisceaux (7) est réalisé sous la forme d'une surface angulaire, de préférence sous la forme d'une surface carrée, et le domaine externe de l'unificateur de faisceaux (7) sous la forme d'une surface angulaire périphérique adaptée autour du pourtour.

10. Microscope selon une des revendications 4 à 9, **caractérisé en ce qu'**un domaine de séparation ou domaine de transition (14) est formé entre le domaine interne (15) de l'unificateur de faisceaux (7) et le domaine externe (13) de l'unificateur de faisceaux (7).

11. Microscope selon la revendication 10, **caractérisé en ce que** le domaine de transition (14) est partiellement transparent à la lumière et partiellement réfléchissant.

12. Microscope selon la revendication 10 ou 11, **caractérisé en ce que** le domaine de transition (14) est réalisé dans l'esprit d'un séparateur neutre.

13. Microscope selon la revendication 10 ou 11, **caractérisé en ce que** le domaine de transition (14) est réalisé sous la forme d'un miroir à gradients dont la réflectivité augmente avec l'ouverture numérique et dont les domaines situés plus loin à l'extérieur transmettent préférentiellement l'illumination évanescente.

14. Microscope selon une des revendications 4 à 13, **caractérisé en ce que** l'unificateur de faisceaux (7) englobe un domaine externe formé comme le domaine interne.

15. Microscope selon la revendication 14, **caractérisé en ce que** les deux domaines sont accordés pour permettre le passage de l'illumination évanescente sur différents objectifs (4).

16. Microscope selon la revendication 14 ou 15, **caractérisé en ce que** le domaine externe est adapté à l'objectif (4) de grossissement le plus important en illumination évanescente.

17. Microscope selon une des revendications 1 à 16, **caractérisé en ce que** l'unificateur de faisceaux (7) agit en concordance avec un diaphragme (16) disposé dans l'objectif (4) de préférence à proximité ou dans le plan de la pupille de l'objectif, qui comporte un domaine central opaque à la lumière d'illumination évanescente en même temps que transparent à la lumière de détection qui revient en arrière et un domaine périphérique transparent à la lumière d'illumination évanescente.

18. Microscope selon une des revendications 1 à 17, **caractérisé en ce qu'**il est possible de choisir la position et la dimension des domaines de l'unificateur de faisceaux (7) et ainsi l'ensemble de l'unificateur de faisceaux (7) en fonction de l'indice de réfraction de la solution contenant l'échantillon à analyser (8) respectivement de l'échantillon à analyser (8) lui-même.

19. Microscope selon la revendication 1, **caractérisé en ce que** le mécanisme de changement pour l'unificateur de faisceaux (7) est synchronisé avec le mécanisme de changement pour les objectifs (4) pour le réglage automatique.

20. Microscope selon une des revendications 1 à 19, **caractérisé en ce que** pour un unificateur de faisceaux (7) déterminé à l'avance, on prévoit une représentation intermédiaire à grossissement variable entre l'unificateur de faisceaux (7) et l'objectif (4) de manière à permettre une adaptation de la dimension de la pupille à l'unificateur de faisceaux (7).

21. Microscope selon une des revendications 1 à 20, **caractérisé en ce qu'**on prévoit deux ou plusieurs sources lumineuses (1, 2) respectivement pour l'illumination en fluorescence traditionnelle et/ou pour l'illumination évanescente.

22. Microscope selon la revendication 1, **caractérisé en ce qu'**en plus de l'illumination évanescente, on peut mettre en oeuvre un laser de manipulation fonctionnant simultanément.
